# EUROPÄISCHE PATENTANMELDUNG

(11) **EP 0 974 261 A1**
(43) Veröffentlichungstag der Anmeldung: **26.01.2000**
(21) Anmeldenummer: 98113930.6
(22) Anmeldetag: 24.07.1998
(51) Int. Cl.: A01F 29/00

(54) **Rundballenhäcksler**

(71) Anmelder: VöLK MASCHINENBAU GmbH, D-86899 Landsberg (DE)
(72) Erfinder: Polykarp, Völk FA. Völk Maschinenbau GmbH, 86899 Landsberg/Lech (DE)

(57) **Zusammenfassung**

Es wird ein Rundballenhäcksler (1) beschrieben, der über ein großdimensioniertes Gebläsegehäuse (4) verfügt, und in dem ein ebenfalls großdimensioniertes Schneidflügelrad (2) integriert ist, dessen Schneidflächendurchmesser (3) in etwa dem Durchmesser eines Großrundballens (11) entspricht, so daß der Rundballen (11) in seinem gesamten Durchmesser über eine Lade-Schiebeklappe (8 - 8a) in den Führungskanal (5) gelangt und kontinuierlich an die Schneidmesser (7) des Schneidflügelrades (2) gepreßt wird, wobei das geschnittene Gut über die Auswurfflügel (20) ausgeblasen wird.

## Beschreibung

Die Erfindung betrifft einen Rundballenhäcksler zum Häckseln von Stroh-, Heu-, Silagerundballen, oder von losen Schüttgütern, wie z.B. Zuckerrüben usw. mit den Merkmalen des Anspruchs 1.

Es sind Rundballenhäcksler mit Messer bestückten Abfrästrommeln, und zugeordneten Abrollwalzen, bzw. mit stirnseitig angeordneten Abfrässcheiben und dahinter angeordneten Auswurfflügeln zum Auswurf des abgefrästen Gutes, die teilweise noch zusätzlich eine Abfrästrommel vorgeschaltet haben, bekannt.

Diese Rundballenhäcksler weisen alle einen Kratzboden auf, der den Rundballen in eine drehende Bewegung bringen muß, damit er in seinem Umfang kontinuierlich abgefräst werden kann.

So ist aus der FR 2585 535 ein Rundballenhäcksler bekannt, der eine Abfrästrommel, einen Förderboden und einen dahinter geschalteten, stirnseitig angeordneten Auswurfflügel, aufweist.

Weiterhin ist aus der DE 4216 510 A1 ein Rundballenhäcksler bekannt, der eine Abfräswalze, einen Förderboden und einen dahinter geschalteten Austragsflügel aufweist.

Weiterhin sind Rundballenhäcksler bekannt, die ausschließlich über einen Förderboden und einen kombinierten Fräs-, und Austragsflügel verfügen, bei denen der Rundballen mittels Kratzboden an die teilweise Öffnung der rotierenden Scheibe gepreßt wird, in eine Drehbewegung gelangt, und somit von außen nach innen in seinem Umfang abgefräst wird. Das Gut wird dann mittels Schaufeln, die sich am Außendurchmesser des Schneidflügelrades befinden, ausgestoßen.

Diese Maschinen eignen sich aber ausschließlich nur für Strohrundballen, da durch die geringe Öffnung zum Schneidflügelrad der Rundballen über den Kratzboden in eine drehende Bewegung gebracht werden muß, damit er an seinem Außendurchmesser abgefräst wird.

Schwere Ballen, wie Heu-, und besonders Grassilageballen, können, bedingt durch das hohe Eigengewicht, nicht in eine drehende Bewegung gebracht werden, und führen daher zur sofortigen Beschädigung der Kratzbodenleisten, bzw. zur Blockierung der Maschine, so daß eine Funktion hier nicht mehr gegeben ist.

Es stellt sich daher die Aufgabe, einen Rundballenhäcksler zu schaffen, der die aufgeführten Nachteile vermeidet und insbesondere eine einfache, problemlose Zuführung zum Schneidorgan und eine gleichmäßige Abfräsung, unabhängig von dem zu verarbeitenden Gut, gewährleistet.

Diese Aufgabe wird erfindungsgemäß mit den Merkmalen des Anspruchs 1 gelöst.

Vorteilhafte Ausgestaltungen der Erfindung sind Gegenstand der Unteransprüche.

Diese erfindungsgemäße Vorrichtung bewirkt ein verblüffend einfaches Fräs- und Zuführungssystem, da der Rundballen in seinem gesamten Durchmesser, ohne jegliche Drehbewegung, direkt an das Schneidflügelrad geführt wird.

Ein weiterer Vorteil dieser Vorrichtung ist der, daß durch das großdimensionierte Schneidflügelrad, und dem großdimensionierten Führungskanal jeder Rund-,und Quaderballen, unabhängig seiner Größe und Beschaffenheit, auf einfachste Weise in seiner gesamten Größe, ohne jegliche Drehbewegung, mittels der kombinierten Lade-, Schiebeklappe kontinuierlich direkt an das Schneidflügelrad geführt wird.

Ein weiterer Vorteil dieser Vorrichtung ist der, daß durch Wegfall des aufwendigen Kratzbodens mit Ölantrieb, kettenangetriebene Vorfallstrommeln, bzw. kettenangetriebene Abrollwalzen, oder Abrollförderböden usw., eine einfache, unkomplizierte, verschleißlose, und daher preisgünstige Lösung gegeben ist.

Ein weiterer Vorteil dieser Vorrichtung ist der, daß nach Schließen der Lade-Schiebeklappe eine Staubentwicklung weitgehend verhindert wird. Da die Maschine hauptsächlich in Ställen zum Einsatz kommt ist eine Vermeidung, der für Mensch und Tier schädlichen Staubentwicklung, von größter Wichtigkeit.

Ein weiterer Vorteil dieser Vorrichtung ist der, daß durch den neuartig geschlossenen Führungskanal und der neuartigen Lade-Schiebeklappe auch lose Güter, wie z.B. Zuckerrüben usw. dem Schneidflügelrad zugeführt werden können, wobei zugleich eine vorteilhafte Futtervorlage durchgeführt werden kann.

Ein weiterer Vorteil dieser Vorrichtung ist der, daß durch die direkte Zuführung der Strohballen an das Schneidflügelrad die Schneidmesser immer quer zur Faser schneiden und somit ohne jegliche Zusatzschneideinrichtungen ein sofortiger Kurzschnitt erreicht wird, sodaß hier eine völlig neue Arbeitsweise bzw. ein völlig neues Arbeitssystem geschaffen wurde.

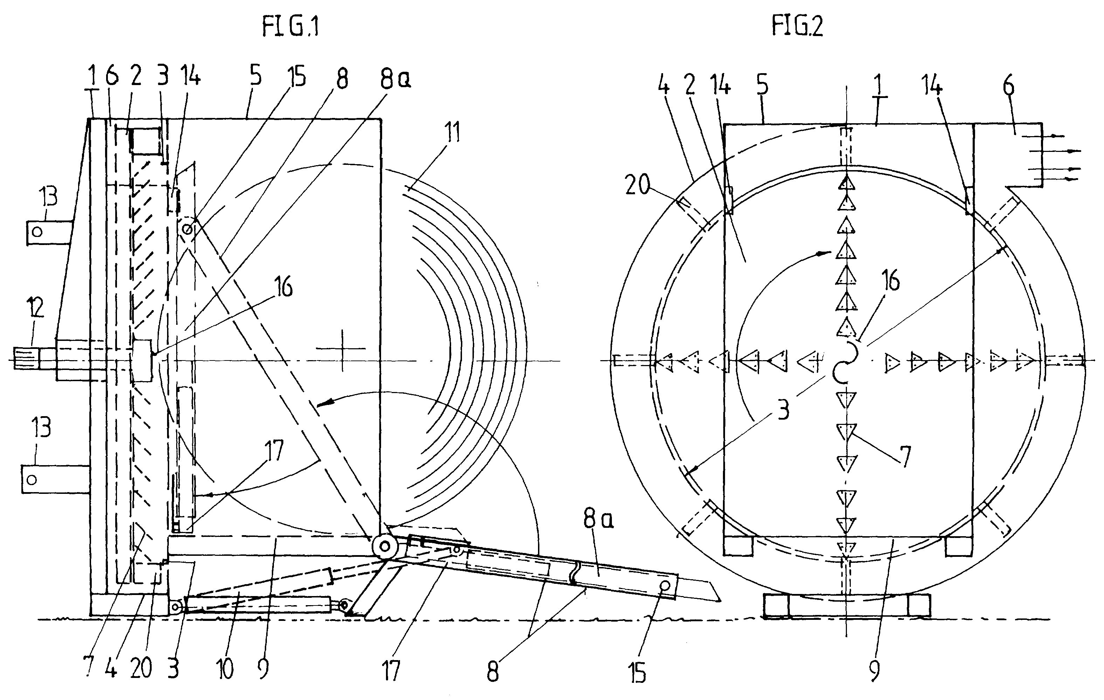

Im folgenden wird ein Ausführungsbeispiel der Erfindung, anhand der Zeichnung näher beschrieben.

Hier zeigt
- Fig. I: eine Seitenansicht des erfindungsgemäßen Rundballenhäckslers mit aufgenommenen Rundballen
- Fig. II: eine Rückansicht des erfindungsgemäßen Rundballenhäckslers

In einem stirnseitig angeordneten, großdimensionierten Gebläse-Gehäuse (4), ist ein ebenfalls großdimensioniertes, kombiniertes Schneidflügelrad (2) integriert, dessen Durchmesser im Schneidbereich (3) in etwa dem eines Großrundballens (11) entspricht.

Dieses Schneidflügelrad (2) hat einen mittig angeordneten S-förmigen Zwangsabweiser (16) der das Gut nach außen fördert und somit das Aufwickeln der Strohhalme im Zentrum verhindert.

Weiterhin ist ein großdimensionierter Führungskanal (5) dem Gebläse-Gehäuse (4) zugeordnet, der ebenfalls in etwa der Breite und Höhe eines Großrundballens (11) entspricht. Am Ende dieses Führungs-Kanals (5) ist eine sogenannte Lade-Schiebeklappe (8 - 8a) zugeordnet, mit der der Rundballen (11) über einen geregelten Hydraulikzylinder (10) in seinem gesamten Durchmesser aufgenommen und direkt an das rotierende, messerbestückte Schneidflügelrad (2) gedrückt, und dabei gleichmäßig in seinem Gesamt-durchmesser abgefräst wird.

Hat die Lade-Schiebeklappe (8 - 8a) nach Abfräsen in etwa des halben Ballens ihre Mittelstellung erreicht, wird sie über ein Drehgelenk (15) und einem darüber befindlichen Anschlag (14) ganz ausgeschoben, so daß sie am Ende parallel zum Schneidflügelrad (2) steht und somit das Gut dem Schneidflügelrad (2) restlos zugeführt wird.

Am unteren Ende der Lade-Schiebeklappe (8 - 8a) ist ein teleskopartiges Räumschild (17) zugeordnet, das sich, unabhängig der Schwenkradien, dem Boden (9) des Führungskanales (5) anpaßt, so daß auch das am Boden befindliche restliche Gut dem Schneidflügelrad (2) präzise zugeführt wird.

Natürlich kann die erfindungsgemäße Vorrichtung (in der Zeichnung nicht näher dargestellt) auch mit einer sogenannten Schiebevorrichtung, einschl. einer daran befindlichen Rückwand, die der Höhe und Breite des Führungs-kanals (5) entspricht, ausgerüstet werden, so daß der Rundballen (11) dem Schneidflügelrad (2) parallel zugeführt wird.

Der erfindungsgemäße Rundballenhäcksler arbeitet folgendermaßen:

Um einen Rundballen (11) abfräsen zu können, wird dieser in den Rundballenhäcksler (1) mittels der Lade-Schiebeklappe (8 - 8a) über den geregelten Hydraulikzylinder (10) eingehoben und gelangt über den Boden (9) des Führungskanals (5) an den S-förmigen Zwangsabweiser (16) des Schneidflügelrades (2), bzw. an dessen gesamte Schneidfläche (3), so daß der Rundballen (11) von den Messern (7) des Schneidflügelrades (2), angetrieben über eine Welle (12), gleichmäßig abgefräst wird und das Gut über die Wurfschaufeln (20) und den Auswurfkanal (6) des Gebläse-Gehäuses (4) ausgeworfen wird.
Ist die Lade-Schiebeklappe (8 - 8a) am Anschlag (14) angelangt, schwenkt sie dann über das Gelenk (15) automatisch aus, so daß die Endstellung parallel zum Schneidflügelrad (2) ist.
Weiterhin ist in der Lade-Schiebeklappe (8 - 8a) im Endbereich ein teleskopartiges Räumschild (17) integriert, das sich, unabhängig der Schwenkradien, der Lade-Schiebeklappe (8 - 8a) durch sein Eigengewicht automatisch dem Boden (9) anpaßt, so daß auch die Reststrohmengen dem Schneidflügelrad (2) zugeführt werden.
Über die Anlenkpunkte (13) wird der Rundballenhäcksler (1) mit dem Schlepper gekoppelt.

## Patentansprüche

1. Rundballenhäcksler (1) für Heu-,Stroh-, und Silagerundballen (11), mit einem stirnseitig angeordnetem Gebläse-Gehäuse (4) und einem Schneidflügelrad (2) mit Schneidmessern (7) und außen befindlichen Auswurfflügeln (20), angetrieben über eine Antriebswelle (12), und angekoppelt mittels Anlenkpunkte (13) an einen Schlepper.
**dadurch gekennzeichnet**
daß das Gebläse-Gehäuse (4) und das darin integrierte Schneidflügelrad (2) mit einem mittig zugeordneten S-förmigen Zwangsabweiser (16) ausgestattet ist und derartig großdimensioniert ist, daß der Durchmesser der Schneidfläche (3) in etwa dem Gesamt-Durchmesser eines Großrundballens (11) entspricht, und daß ein zugeordneter Führungskanal (5) ebenfalls die Höhe und Breite entsprechend den Ausmaßen eines Großrundballens (11) aufweist und seinem Ende eine schwenkbare Lade Schiebeklappe (8 - 8a) zugeordnet ist.

2. Rundballenhäcksler nach Anspruch 1, **dadurch gekennzeichnet**, daß die Lade-Schiebeklappe (8 - 8a) nach erreichen ihrer Mittelstellung über einen Anschlag (14) und über ein Drehgelenk (15) so ausgeschwenkt wird, daß sie in ihrer Endstellung parallel zum Schneidflügelrad (2) steht.

3. Rundballenhäcksler, nach Anspruch 1 und 2, **dadurch gekennzeichnet**, daß die Ausschwenkung der Ladeklappe (8a) auch über einen zweiten Hydraulikzylinder erfolgen kann.

4. Rundballenhäcksler, nach Anspruch 1 bis 3, **dadurch gekennzeichnet**, daß am unteren Ende der Lade-Schiebeklappe (8) ein teleskopartiges Räumschild (17) zugeordet ist, das unabhängig der Schwenkradien der Lade-Schiebeklappe (8 - 8a), am Boden (9) des Führungskanals (5) gleitet.

5. Rundballenhäcksler, nach Anspruch 1 bis 4, **dadurch gekennzeichnet**, daß der Rundballen (11) auch mit einer sogenannten Schiebevorrichtung, einschließlich einer daran befindlichen senkrechten Rückwand, die der Höhe und Breite des Führungskanals (5) entspricht, parallel dem Schneidflügelrad (2) zugeführt werden kann.

6. Rundballenhäcksler, nach Anspruch 1 bis 5, **dadurch gekennzeichnet**, daß leichte Strohrundballen (11) auch mit einem herkömmlichen Förderboden, der ebenfalls mit einer dementsprechenden Rückwand versehen werden kann, dem Schneidflügelrad (2) zugeführt werden können.
